**Europäisches Patentamt**

**European Patent Office**

**Office européen des brevets**

(19)

(11) Veröffentlichungsnummer: **0 183 926 B1**

# EUROPÄISCHE PATENTSCHRIFT

(12)

(45) Veröffentlichungstag der Patentschrift: **21.08.91**

(51) Int. Cl.⁵: **H04Q 7/04**

(21) Anmeldenummer: **85111581.6**

(22) Anmeldetag: **13.09.85**

(54) Verfahren zum Übertragen von digitalen Informationen in einem Funktelefonnetz.

(30) Priorität: **01.12.84 DE 3443974**

(43) Veröffentlichungstag der Anmeldung:
**11.06.86 Patentblatt 86/24**

(45) Bekanntmachung des Hinweises auf die
Patenterteilung:
**21.08.91 Patentblatt 91/34**

(84) Benannte Vertragsstaaten:
**AT BE CH DE FR GB IT LI NL SE**

(56) Entgegenhaltungen:
**EP-A- 0 036 146**
**EP-A- 0 069 275**
**DE-A- 2 812 009**

**IEEE INTERNATIONAL CONFERENCE ON
COMMUNICATIONS, Amsterdam, 14.-17. Mai
1984, Band 3, Seiten 1192-1198, IEEE, New
York, US; H. PFANNSCHMIDT et al.: "MATS-E
- A cellular mobile automatic telephone system"**

(73) Patentinhaber: **ROBERT BOSCH GMBH
Postfach 50
W-7000 Stuttgart 1(DE)**

(72) Erfinder: **Ketterling, Hans-Peter, Dipl.-Ing.
Manfred-von-Richthofen-Strasse 11
W-1000 Berlin 42(DE)**

(74) Vertreter: **Schmidt, Hans-Ekhardt
Robert Bosch GmbH Geschäftsbereich Elektronik Patent- und Lizenzabteilung Forckenbeckstrasse 9-13
W-1000 Berlin 33(DE)**

## Beschreibung

### Stand der Technik

Die Erfindung geht von einem Verfahren nach der Gattung des Patentanspruchs 1 aus.

Es ist ein Funktelefonnetz bekannt (Global Communications, 1984, Heft 1, Seiten 46 bis 50), das die Bezeichnung NORDIC MOBILE TELEPHONE (NMT) trägt. Bei dem bekannten Verfahren findet die Übertragung von Datentelegrammen asynchron und damit vergleichsweise langsam statt. Ein synchrones Mobil-Funktelephonnetz ist aus Dokument EP-A-0 036 146 bekannt.

### Vorteile der Erfindung

Das erfindungsgemäße Verfahren mit den kennzeichnenden Merkmalen des Patentanspruchs 1 hat den Vorteil, daß durch Anwendung eines Synchronverfahrens mit festen Zeitschlitzzuordnungen und durch eine unsymmetrische Auslegung der Telegrammübermittlung von einer ortsfesten Station zu einer mobilen Station und umgekehrt eine Beschleunigung des Aufbaus von Verbindungen möglich ist, ohne daß dadurch die Betriebssicherheit verringert wird.

Durch die in den Unteransprüchen aufgeführten Maßnahmen sind vorteilhafte Weiterbildungen und Verbesserungen des in dem Patentanspruch 1 angegebenen Verfahrens möglich. Besonders vorteilhaft ist ein erfindungsgemäßes Verfahren, bei dem die Informations-Telegramme eines jeden Zeitabschnitts je einer Gruppe von mobilen Stationen und die Reserve-Telegramme allen Gruppen von mobilen Stationen zugeordnet sind. Durch diese Art der Aufteilung kann die Übertragungskapazität erhöht werden.

### Zeichnung

Ein Ausführungsbeispiel der Erfindung ist in der Zeichnung anhand mehrerer Figuren dargestellt und in der nachfolgenden Beschreibung näher erläutert. In der Zeichnung bedeuten

Fig. 1    ein Prinzipschaltbild eines zellularen Funktelefonnetzes,

Fig. 2    den zeitlichen Verlauf der Informationsübertragung von einer ortsfesten Station zu einer mobilen Station,

Fig. 3    den zeitlichen Verlauf der Informationsübertragung von einer mobilen Station zu einer ortsfesten Station,

Fig. 4    eine vergrößerte Darstellung des zeitlichen Verlaufs gemäß Fig. 2,

Fig. 5    eine vergrößerte Darstellung des zeitlichen Verlaufs gemäß Fig. 3,

Fig. 6    eine gegenüber Fig. 5 stark vergrößerte Darstellung eines Teilabschnitts mit Pausen am Anfang und Ende,

Fig. 7A    den zeitlichen Ablauf in einem Organisationskanal und

Fig. 7B    den zeitlichen Ablauf in einem Sprachkanal.

### Beschreibung der Erfindung

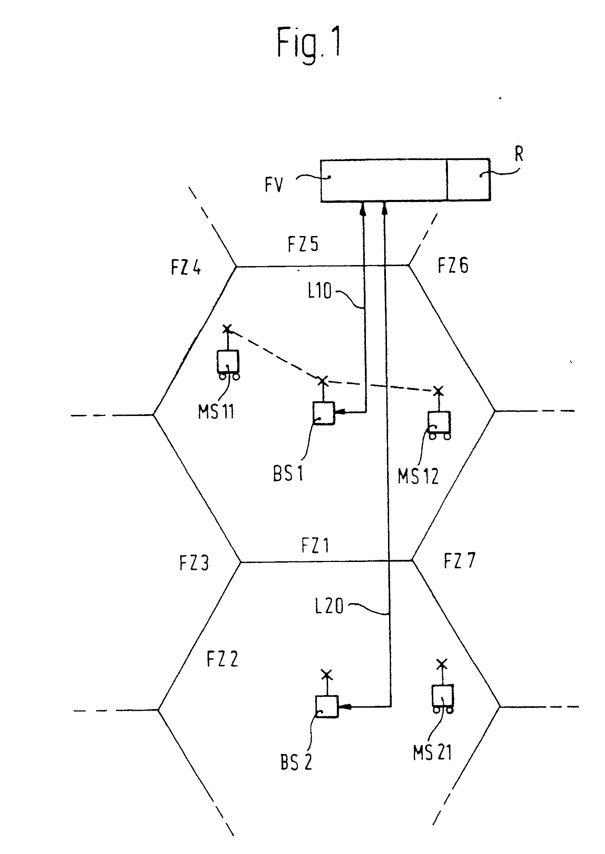

Nach Fig. 1 ist ein Funktelefonnetz in Funkzellen FZ1, FZ2 ... aufgeteilt, von denen jede eine ortsfeste Funksende- und -empfangsstation, im folgenden ortsfeste Station BS1, BS2 ... genannt, aufweist. Innerhalb des Funknetzes verkehren mobile Funksende- und -empfangsstationen, im folgenden mobile Stationen MS11 ... MS1N, MS21 ... MS2M genannt, die mit den ortsfesten Stationen Datentelegramme austauschen und über die ortsfesten Stationen miteinander in Verbindung treten können.

Die ortsfesten Stationen BS1, BS2 sind vorzugsweise über Leitungen L10, L20 mit einer Funkvermittlungsstelle FV verbunden, die die gesamte Informationsübertragung steuert und zu diesem Zweck mit einem Rechner R ausgerüstet ist.

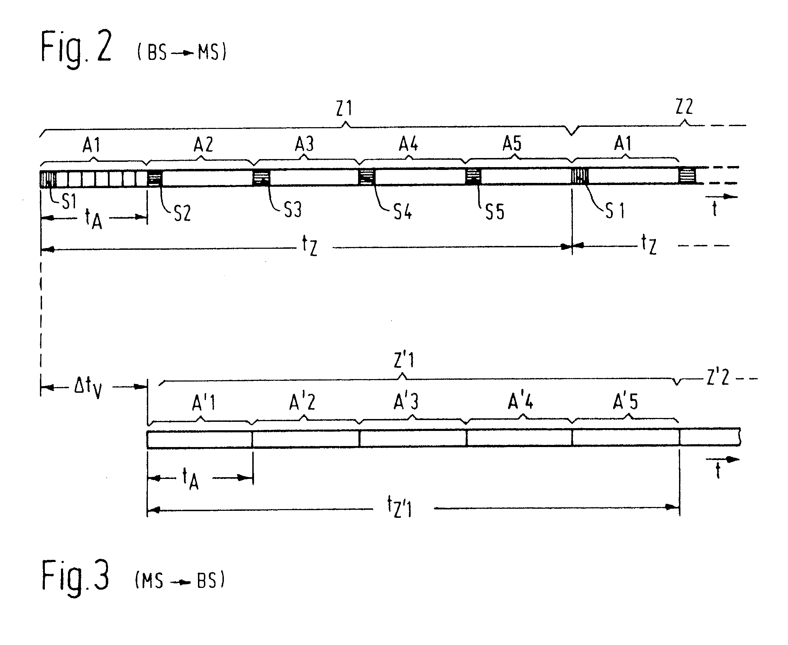

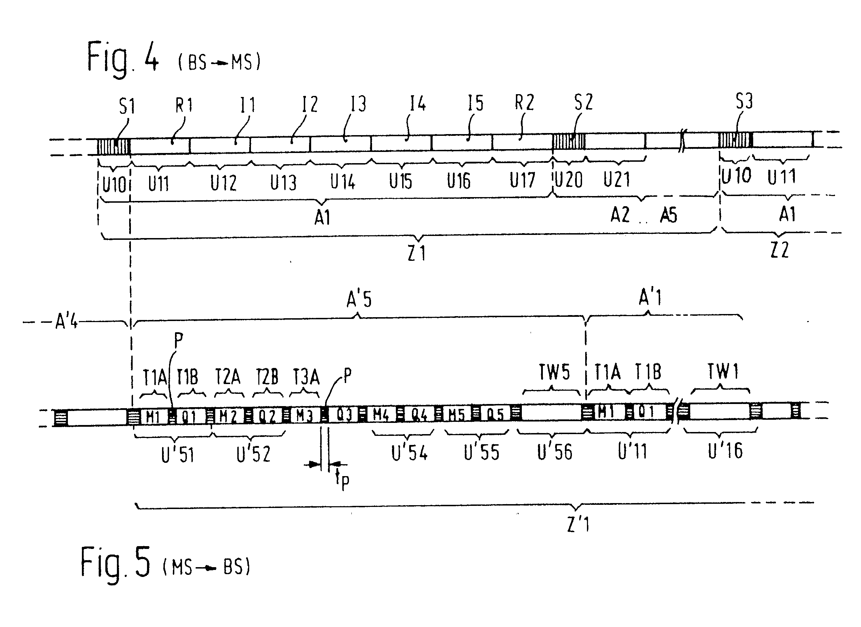

Die Übertragung von Informationen (Sprache, Daten) erfolgt von einer ortsfesten Station, zum Beispiel BS1, zu einer mobilen Station, zum Beispiel MS11, nach dem in Fig. 2 gezeigten Zeitrahmen. Danach wiederholen sich Zyklen Z1, Z2 ... von je einer Dauer $t_z$ von zum Beispiel 1 s in ununterbrochener Folge. Jeder Zyklus, zum Beispiel Z1, ist in mehrere gleich lange Zeitabschnitte, zum Beispiel m = 5 Zeitabschnitte A1 ... A5, unterteilt. Jeder Zeitabschnitt, der zum Beispiel eine Dauer von $t_A$ = 200 ms aufweist, ist in mehrere Unterabschnitte, zum Beispiel in n = 8 Unterabschnitte U10 ... U17 (vgl. Fig. 4) aufgeteilt, wobei der erste Unterabschnitt U10 für die Übertragung eines Synchron-Telegramms S1 von zum Beispiel etwa 10 ms Dauer vorgesehen ist. Die sich an den ersten Unterabschnitt U10 anschließenden Unterabschnitte U11 ... U17 haben vorzugsweise gleiche Längen von zum Beispiel 27 ms. Die Unterabschnitte U11 und U17 sind für Reserve-Telegramme R1, R2 bestimmt und die Unterabschnitte U12 ... U16 für Informations-Telegramme I1 ... I5.

Die Synchron-Telegramme S1, S2 ... (Barker-Wörter) sind derart aufgebaut, daß die mobilen Stationen MS11, MS21 ... jederzeit erkennen können, welcher Teil eines Zyklus Z1, Z2 ... gerade abläuft. Die Informations-Telegramme I1, I2 ... sind Standard-Telegramme, die der normalen Informationsübertragung von der ortsfesten Station, zum Beispiel BS1, zu einer mobilen Station, zum Beispiel MS11, dienen, die also zum Beispiel Rufe, Anweisungen und Informationen für die mobilen Stationen enthalten.

Die Reserve-Telegramme, zum Beispiel R1, eines jeden Zeitabschnitts, zum Beispiel A1, nehmen ebenfalls Rufe, das sind Selektivrufe zum Anrufen bestimmter mobiler Stationen, Anweisungen, das sind von der Funkvermittlungsstelle FV ausgehende Befehle zur Kanalumschaltung, sowie allgemeine Informationen auf, wobei die gesamten Informationen auf beide Unterabschnitte U11 und U17 verteilt werden können. Das zweite Reserve-Telegramm R2 benötigt keine Selektivrufnummer, weil schon in dem Unterabschnitt U11 für das erste Reserve-Telegramm R1 auf das Folgetelegramm R2 aufmerksam gemacht wird und weil dieses nur in dem Unterabschnitt U17 erscheinen kann. Alle Unterabschnitte U10, U11 ... schließen sich lückenlos aneinander an.

In der Gegenrichtung, das heißt von einer mobilen Station MS11, MS21 ..., zu einer ortsfesten Station BS1, BS2 ..., findet die Übertragung in einem von dem Zeitrahmen nach den Fig. 2 und 4 abweichenden Rahmen statt; vgl. Fig. 3 und 5. Nach Fig. 3 sind für die Übertragung ebenfalls feste Zyklen Z'1, Z'2 ... vorgesehen, die gegenüber den Zyklen Z1, Z2 ... einen bestimmten zeitlichen Versatz $\Delta t_V$ der Dauer $t_A$ eines Zeitabschnittes aufweisen. Dieser Versatz ist vorgesehen, damit eine zum Beispiel in einem Unterabschnitt des Zeitabschnitts A1 gerufene mobile Station, zum Beispiel MS11, in dem zeitlich versetzten Zeitabschnitt A'1 den Ruf quittieren kann, wie weiter unten genauer erläutert wird.

Jeder Zyklus, zum Beispiel Z'1 (Fig. 3) ist ebenfalls in fünf Zeitabschnitte, zum Beispiel A'1 ... A'5, und jeder Zeitabschnitt, zum Beispiel A'5 (Fig. 5), in sechs Unterabschnitte, zum Beispiel U'51 ... U'56, aufgeteilt. Jeder Unterabschnitt, zum Beispiel U'51, enthält zwei vorzugsweise gleich lange Teilabschnitte T1A, T1B, die durch einen Pausenabschnitt P der Dauer $t_p$ getrennt sind. Der letzte Unterabschnitt, zum Beispiel U'56, eines jeden Zeitabschnitts, zum Beispiel A'5, ist nicht in zwei Teilabschnitte aufgeteilt; er ist jedoch von dem vorhergehenden und von dem nachfolgenden Unterabschnitt U'55 und U'11 durch je eine Pause getrennt. Die Pausenzeit $t_p$ dient dem Laufzeitausgleich der von der ortsfesten Station, zum Beispiel BS1, unterschiedlich weit entfernten mobilen Stationen, zum Beispiel MS11, in einer Funkzelle, zum Beispiel FZ1.

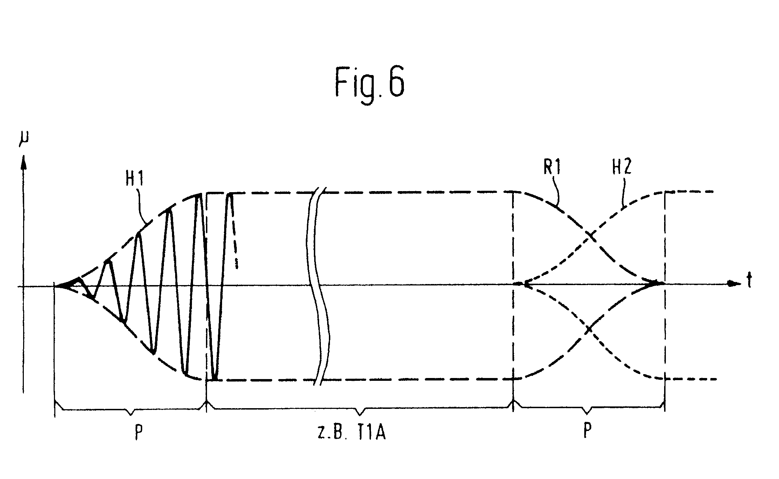

Von den zu einem Unterabschnitt, zum Beispiel U'51, gehörenden beiden Teilabschnitten, zum Beispiel T1A, T1B, ist jeweils der erste Teilabschnitt zur Übertragung eines Melde-Telegramms M1, M2 ... und der zweite Teilabschnitt zur Übertragung eines Quittungs-Telegramms Q1, Q2 ... vorgesehen; vgl. Fig. 5. Da die einzelnen Teilabschnitte T1A, T1B, T2A, T2B von verschiedenen mobilen Stationen MS11, MS21 ... belegt werden können, sind zwischen den Teilabschnitten die bereits erwähnten Pausen P von vorzugsweise der Dauer $t_p$ = 3 ms vorgesehen, die zum weichen Hochtasten der Sender der mobilen Stationen benötigt werden (vgl. Fig. 6), damit keine unnötigen Verlustzeiten bei der Übertragung entstehen. In Fig. 6 findet während der ersten Pause P das mit H1 gekennzeichnete Hochtasten eines Senders einer ersten mobilen Station und in der letzten Pause das mit R1 bezeichnete Abschalten dieses Senders und das mit H2 bezeichnete gleichzeitige Hochtasten des Senders einer weiteren mobilen Station statt. Der letzte Unterabschnitt, zum Beispiel U'56, eines jeden Zeitabschnitts, zum Beispiel A'5, dient zur Übertragung eines Wahl-Telegramms TW1 ..., zum Beispiel TW5, in welchem die Rufnummer einer von der betreffenden mobilen Station gewünschten anderen mobilen Station oder eines Fernsprechteilnehmers zu der ortsfesten Station übertragen wird.

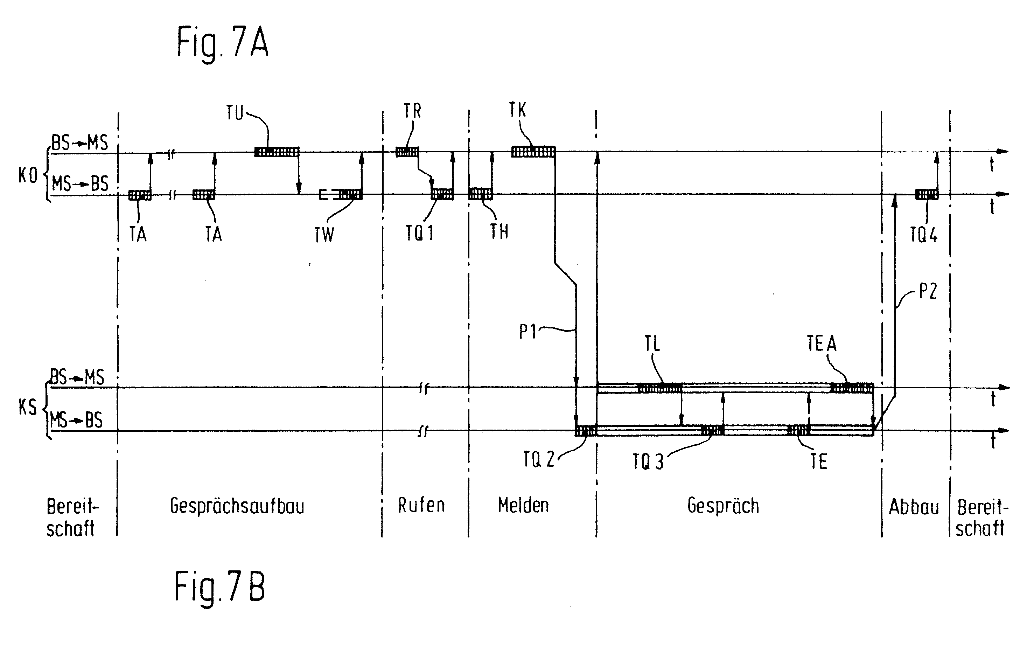

Aufbau, Durchführung und Abbau eines von einer mobilen Station ausgehenden und mit einer anderen mobilen Station zu führenden Gespräches werden an Hand von in Fig. 7 gezeigten Zeitschemata erläutert.

In Fig. 7A ist ein Zeitschema eines Organisationskanals KO gezeigt, wobei die obere Zeitachse dem Funkverkehr von der ortsfesten Station BS, zum Beispiel BS1, zur mobilen Station MS, zum Beispiel MS11, und die untere Zeitachse dem Funkverkehr von der mobilen Station, zum Beispiel MS11, zu der ortsfesten Station, zum Beispiel BS1, zugeordnet ist. Eine mobile Station, zum Beispiel MS11, meldet angenommenerweise mittels eines Anmeldungs-Telegramms TA - gegebenenfalls wiederholt - ihren Gesprächswunsch bei der ortsfesten Station, zum Beispiel BS1, an. Diese sendet dann an die rufende mobile Station ein Aufforderungs-Telegramm TU zur Wahlaufforderung. Daraufhin sendet die mobile Station die Rufnummer des gewünschten Funk- oder Drahtteilnehmers, zum Beispiel der mobilen Station MS12, mittels eines Wahl-Telegramms TW an die ortsfeste Station BS1. Von dieser wird ein Ruf-Telegramm TR an den gewünschten Teilnehmer gesendet, das von diesem mittels eines ersten Quittungs-Telegramms TQ1 bestätigt wird. Ein gleiches Ruf-Telegramm geht auch an den rufenden Teilnehmer, sobald die drahtseitige Verbindung aufgebaut ist; er bestätigt es ebenfalls mit einem ersten Quittungs-Telegramm TQ1. Dann wird in der gerufenen mobilen Station der Handapparat abgenommen und dadurch ein Abhebe-Telegramm TH ausgelöst; vgl. Fig. 7A. Das gleiche geschieht auch in der rufenden mobilen Station. Von der ortsfesten Station erfolgt anschließend die Zuweisung eines Sprachkanals mittels eines Zuweisungs-Telegramms TK;

vgl. auch Pfeil P1. In diesem Sprachkanal KS (Fig. 7B) quittieren dann die rufende und gerufene mobile Station durch ein zweites Quittungs-Telegramm TQ2 die Kanalzuweisung. Anschließend beginnt das Gespräch, wobei während des Gesprächs die ortsfeste Station mittels eines Telegramms TL die mobile Station zur Erhöhung ihrer Sendeleistung auffordern kann, wenn sich zum Beispiel die Empfangsverhältnisse in der ortsfesten Station ändern. Zur Bestätigung einer erfolgten Leistungsänderung in der mobilen Station kann diese ein drittes Quittungs-Telegramm TQ 3 aussenden. Zur Signalisierung des Endes eines Gesprächs sendet die jeweilige mobile Station ein Gesprächsende-Telegramm TE an die ortsfeste Station, die mit einem Telegramm TEA die Umschaltung der mobilen Station vom Sprachkanal KS auf den Organisationskanal KO bewirkt (vgl. Pfeil P2) und den Abbau der Gesprächsverbindung einleitet. Die mobile Station sendet ein viertes Quittungs-Telegramm TQ4 an die ortsfeste Station und zeigt damit ihre Bereitschaft zum Empfang von weiteren Telegrammen der ortsfesten Station an. Die andere mobile Station erhält ebenfalls ein Umschalt-Telegramm TEA, worauf sie ebenfalls auf den Organisationskanal KO zurückschaltet und sich durch ein Quittungs-Telegramm TQ4 zurückmeldet. Für den Aufbau von einer mobilen zu einer ortsfesten Station und umgekehrt gelten analoge Überlegungen, nur daß auf der Drahtseite einige der geschilderten Signalisierungsmöglichkeiten entfallen.

Wie bereits weiter oben angedeutet, sind die Teilabschnitte T1A ... für den spontanen Meldezugriff der mobilen Stationen vorgesehen. Von den mobilen Teilnehmern werden zwecks Zuordnung zu einem Teilabschnitt zum Beispiel nur die letzten beiden Ziffern der Teilnehmer-Nummern benutzt. Vorzugsweise werden Berechtigungen zum Zugriff zu den Teilabschnitten in der Form erteilt, daß zum Beispiel den Endnummern "01", "26", "51" und "76" die Teilabschnitte T1A und den Endnummern "02", "27", "52" und "77" die Teilabschnitte T2A usw. zugeordnet werden. Der Meldezugriff erfolgt spontan dann zum nächsten zugeordneten Zeitschlitz. Falls er nicht im nächsten zugeordneten Teilabschnitt durch eine Aufforderung der ortsfesten Station zu weiteren Aktivitäten quittiert wird, erfolgt in der mobilen Station eine zufallsgesteuerte Wiederholsequenz innerhalb der zugeordneten Teilabschnitte, bis eine Quittung eintrifft. Die Berechtigungen können zum Beispiel für Notrufe, aber auch für bestimmte Teilnehmer einer Hierarchie vorgesehen sein.

### Patentansprüche

1. Verfahren zum Synchron- Übertragen von digitalen Informationen in einem Funktelefonnetz, das mehrere Funkzellen mit je einer ortsfesten Funkstation und einer Vielzahl von mobilen Funkstationen umfaßt, dadurch gekennzeichnet, daß die Übertragung der Informationen von den ortsfesten Stationen (BS1 ...) zu den mobilen Stationen (MS11 ...) in sich ständig wiederholenden ersten Zyklen (Z1 ...) aus m Zeitabschnitten (A1 ...) mit n Unterabschnitten (U10 ...) erfolgt, wobei ein erster Unterabschnitt (U10) für ein Synchron-Telegramm (S1) und weitere Unterabschnitte für Informations-Telegramme (I1 ..) und Reserve-Telegramme (R1 ...) vorgesehen sind, und daß die Übertragung von den mobilen Stationen zu den ortsfesten Stationen in sich ständig wiederholenden und gegenüber den ersten Zyklen einen festen zeitlichen Versatz ($\Delta t_V$) aufweisenden zweiten Zyklen (Z'1 ...) erfolgt, deren Zeitabschnitte (A'1 ...) in Unterabschnitte (U'10 ...) aufgeteilt sind, die mit Ausnahme des letzten Unterabschnitts (U'16 ...) je zwei durch eine Pause (P) getrennte Teilabschnitte (T1A, T1B) enthalten.

2. Verfahren nach Anspruch 1, dadurch gekennzeichnet, daß die ersten Unterabschnitte (T1A) eines jeden Unterabschnitt-Paares (T1A, T1B) für ein Meldungs-Telegramm (M1) der mobilen Station (MS) an eine ortsfeste Station (BS) und der zweite Unterabschnitt (T1B) für ein Quittungs-Telegramm (Q1) vorgesehen ist.

3. Verfahren nach Anspruch 1, dadurch gekennzeichnet, daß die Informations-Telegramme (I1 ... I5) eines jeden Zeitabschnitts (A1) je einer Gruppe von mobilen Stationen (MS) und die Reserve-Telegramme (R1, R2) allen Gruppen von mobilen Stationen zugeordnet sind.

4. Verfahren nach Anspruch 1, dadurch gekennzeichnet, daß die Pausen (P) derart bemessen sind, daß während einer Pause das Sendeteil einer mobilen Station hochgetastet und das Sendeteil einer anderen mobilen Station gleichzeitig abgeschaltet wird.

5. Verfahren nach Anspruch 1, dadurch gekennzeichnet, daß innerhalb eines Zeitabschnitts (A1) bestimmte Unterabschnitte (U11, U17) für die Übertragung von Reserve-Telegrammen (R1, R2) vorgesehen sind.

6. Verfahren nach Anspruch 1 oder einem der folgenden, dadurch gekennzeichnet, daß der Zugriff der mobilen Stationen (MS) zu den Teilabschnitten (T1A, T2A) nach einem Berechtigungsschema erfolgt, nach welchem Teilnehmer mit gleicher Endziffernfolge ihrer Rufnummer je einem Teilabschnitt zugeordnet sind.

7.  Verfahren nach Anspruch 6, dadurch gekennzeichnet, daß zwecks Bildung von Zugriffsprioritäten einzelnen mobilen Stationen (MS11 ...) der Zugriff zu mehr als einem Teilabschnitt (T1A, T2A ...) möglich ist.

8.  Verfahren nach Anspruch 6 oder 7, dadurch gekennzeichnet, daß im Falle eines Notrufs allen mobilen Stationen der Zugriff zu allen Teilabschnitten (T1A, T2A ...) möglich ist.

9.  Verfahren nach Anspruch 1 oder 2, dadurch gekennzeichnet, daß der letzte Unterabschnitt (U'16) eines jeden Abschnitts (A'1) bei der Übertragung von einer mobilen Station zu einer ortsfesten Station einem Wahl-Telegramm (TW1) vorbehalten ist.

## Claims

1.  Method for synchronous transmission of digital information in a radiotelephone network, which comprises a plurality of radio cells each having a stationary radio station and a number of mobile radio stations, characterised in that data is transmitted from the stationary stations (BS1 ...) to the mobile stations (MS11 ...) in continuously repeated first cycles (Z1 ...) of m time periods (A1 ...) with n sub-periods (U10 ...), wherein a first sub-period (U10) is provided for a synchronous telegram (S1) and further sub-periods are provided for information telegrams (I1 ...) and reserve telegrams (R1 ...), and transmission from the mobile stations to the stationary stations is effected in continuously repeated second cycles (Z'1 ...), which have a fixed time offset ($t_V$) with respect to the first cycles, and whose time periods (A'1 ...) are divided into sub-periods (U'10 ...), which, with the exception of the last sub-period (U'16 ...), each contain two component periods (T1A, T1B), which are separated by a pause (P).

2.  Method as in claim 1, characterised in that the first sub-periods (T1A) of each sub-period pair (T1A, T1B) (...) for a message telegram (M1) from the mobile station (MS) to a stationary station (BS), and the second sub-period (T1B) is provided for an acknowledgement telegram (Q1).

3.  Method as in claim 1, characterised in that the information telegrams (I1 ... 15) of each time period (A1) are associated with a group of mobile stations (MS), and the reserve telegrams (R1, R2) are associated with all groups of mobile stations.

4.  Method as in claim 1, characterised in that the pauses (P) are dimensioned in such a way that, during a pause, the transmitting part of a mobile station is keyed up and the transmitting part of another mobile station is simultaneously switched off.

5.  Method as in claim 1, characterised in that, within a time period (A1), particular sub-periods (U11, U17) are provided for the transmission of reserve telegrams (R1, R2).

6.  Method as in claim 1 or any of the following, characterised in that access of the mobile stations (MS) to the component periods (T1A, T2A) is effected according to an authentication scheme, according to which subscribers having the same final sequence of digits in their call number are associated with one component period.

7.  Method as in claim 6, characterised in that, for the purpose of forming access priorities, it is possible for individual mobile stations (MS11 ...) to have access to more than one component period (T1A, T2A ...).

8.  Method as in claim 6 or 7, characterised in that, in the event of an emergency call, it is possible for all mobile stations to have access to all component periods (T1A, T2A ...).

9.  Method as in claim 1 or 2, characterised in that the last sub-period (U'16) of each period (A'1) is reserved for a selection telegram (TW1) during transmission from a mobile station to a stationary station.

## Revendications

1.  Procédé pour la transmission synchrone d'informations numériques dans un réseau de radio téléphone, qui comprend plusieurs cellules radio comportant chacune une station radio fixe et une pluralité de stations radio mobiles, procédé caractérisé en ce que la transmission des informations, à partir des stations fixes (BS1 ...) aux stations mobiles (MS11 ...) s'effectue dans de premiers cycles (Z1 ...) se répétant constamment constitués de n intervalles de temps (A1 ...) avec n sous-intervalles (U10 ...), un premier sous-intervalle (U10) étant prévu pour un télégramme de synchronisation (S1), tandis que d'autres sous-intervalles sont prévus pour des télégrammes d'informations (I1 ...) et des télégrammes de réserve (R1 ...),

et en ce que la transmission à partir des stations mobiles vers les stations fixes s'effectue dans des seconds cycles (Z'1 ...) se répétant constamment et comportant, par rapport aux premiers cycles, un décalage fixe dans le temps ($\Delta t_V$), les intervalles de temps de ces seconds cycles (A'1 ...) étant répartis en sous-intervalles (U'10 ...) qui, à l'exception du dernier sous-intervalle (U16 ...) comprennent chacun deux intervalles partiels (T1A, T1B) séparés par une pause (P).

2. Procédé selon la revendication 1, caractérisé en ce que le premier sous-intervalle (T1A) de chaque paire de sous-intervalles (T1A, T1B) est prévu pour un télégramme d'annonce (M1) de la station mobile (MS) à une station fixe (BS), tandis que le second sous-intervalle (T1B) est prévu pour un télégramme d'accusé de réception (Q1).

3. Procédé selon la revendication 1, caractérisé en ce que les télégrammes d'informations (I1 ... I5) de chaque intervalle de temps (A1) sont associés respectivement à un groupe de stations mobiles (MS), tandis que les télégrammes de réserver (R1, R2) sont associés à tous les groupes de stations mobiles.

4. Procédé selon la revendication 1, caractérisé en ce que les pauses (P) sont dimensionnées de façon que pendant les pauses, la partie émettrice d'une émission est introduite, tandis que la partie émettrice de l'autre station mobile est en même temps arrêtée.

5. Procédé selon la revendication 1, caractérisé en ce qu'à l'intérieur d'un intervalle de temps (A1) il est prévu des sous-intervalles déterminés (U11, U17) pour la transmission de télégrammes de réserve (R1, R2).

6. Procédé selon la revendication 1 ou une des suivantes, caractérisé en ce que l'accès des stations mobiles (MS) aux intervalles partiels (T1A, T2A) s'effectue d'après un schéma d'autorisation selon lequel des abonnés ayant la même succession de chiffres terminaux de leurs numéros d'appel, sont respectivement associés à un intervalle partiel.

7. Procédé selon la revendication 6, caractérisé en ce que, dans le but d'établir des priorités d'accès de différentes stations mobiles (MS11 ...), l'accès est possible à plus d'un intervalle partiel (T1A, T2A ...).

8. Procédé selon la revendication 6 ou 7, caractérisé en ce qu'en cas d'un appel d'urgence, de toutes les stations mobiles, l'accès à tous les intervalles partiels (T1A, T2A ...) est possible.

9. Procédé selon la revendication 1 ou 2, caractérisé en ce que le dernier sous-intervalle (U'16) de chaque intervalle (A'1) est réservé à un télégramme de sélection (TW1) lors de la transmission d'une station mobile vers une station fixe.

# Fig.1

FV

R

FZ5

FZ4

FZ6

L10

MS11

BS1

MS12

FZ1

FZ3

FZ7

L20

FZ2

BS2

MS21

Fig. 2 (BS → MS)

Z1 ........................................................................................................... Z2

A1    A2    A3    A4    A5    A1

S1    S2    S3    S4    S5    S1    t

$t_A$

$t_Z$    $t_Z$

$\Delta t_V$

Z'1 ........................................................................................................... Z'2

A'1    A'2    A'3    A'4    A'5

$t_A$

$t_{Z'1}$

Fig. 3 (MS → BS)

EP 0 183 926 B1

EP 0 183 926 B1

## Fig. 4 (BS → MS)

## Fig. 5 (MS → BS)

# Fig.6

EP 0 183 926 B1

Fig. 7A

Fig. 7B